(19) Europäisches Patentamt
European Patent Office
Office européen des brevets

(11) **EP 1 290 905 B1**

(12) **EUROPÄISCHE PATENTSCHRIFT**

(45) Veröffentlichungstag und Bekanntmachung des Hinweises auf die Patenterteilung:
**22.05.2019   Patentblatt 2019/21**

(21) Anmeldenummer: **01929269.7**

(22) Anmeldetag: **28.03.2001**

(51) Int Cl.:
*H04W 12/04* (2009.01)     *H04W 12/06* (2009.01)
*H04W 12/02* (2009.01)

(86) Internationale Anmeldenummer:
**PCT/DE2001/001180**

(87) Internationale Veröffentlichungsnummer:
**WO 2001/091478 (29.11.2001 Gazette 2001/48)**

(54) **VERFAHREN ZUR KRYPTOGRAFISCHEN IDENTIFIKATION EINER PHYSIKALISCHEN EINHEIT IN EINEM DRAHTLOSEN TELEKOMMUNIKATIONSNETZWERK**

METHOD FOR THE CRYPTOGRAPHICALLY VERIFIABLE IDENTIFICATION OF A PHYSICAL UNIT IN A PUBLIC, WIRELESS TELECOMMUNICATIONS NETWORK

PROCEDE D'IDENTIFICATION CONTROLABLE PAR CRYPTOGRAPHIE D'UNE UNITE PHYSIQUE DANS UN RESEAU DE TELECOMMUNICATION OUVERT SANS FIL

(84) Benannte Vertragsstaaten:
**DE FR GB IT**

(30) Priorität: **26.05.2000   DE 10026326**

(43) Veröffentlichungstag der Anmeldung:
**12.03.2003   Patentblatt 2003/11**

(73) Patentinhaber: **IPCom GmbH & Co. KG**
**82049 Pullach (DE)**

(72) Erfinder: **ADI, Wael**
**38108 Braunschweig (DE)**

(74) Vertreter: **Tomlinson, Edward James et al**
**Frohwitter**
**Patent- und Rechtsanwälte**
**P.O. Box 86 03 68**
**81630 München (DE)**

(56) Entgegenhaltungen:
**EP-A- 0 800 293     WO-A-00/01187**

• **GIRARDOT Y : " Bull CP8 smart card uses in cryptology " ADVANCES IN CRYPTOLOGY. PROCEEDINGS OF EUROCRYPT 84 , 11. April 1984 (1984-04-11), Seiten 464-469, XP002185511 Berlin, West Germany, Springer-Verlag ISBN: 3-540-16076-0**
• **Menezes, Oorschot, Vanstone: "Handbook of Applied Cryptography", CRC Series on Discrete Mathematics and Its Applications, 16 October 1996 (1996-10-16), pages 397-405, 490-491, Baton Rouge ISBN: 978-0-429-46633-5 Retrieved from the Internet: URL:http://cacr.uwaterloo.ca/hac/about/ [retrieved on 2018-04-16]**

**Beschreibung**

STAND DER TECHNIK

Die vorliegende Erfindung betrifft ein Verfahren zur kryptografisch prüfbaren Identifikation einer physikalischen Einheit in einem offenen, drahtlosen Telekommunikationsnetzwerk.

Obwohl auf beliebige Telekommunikationseinrichtungen anwendbar, werden die vorliegende Erfindung sowie die ihr zugrundeliegende Problematik in Bezug auf Mobilfunksysteme erläutert.

GSM-Mobilfunksysteme und diese betreffende kryptographische Verfahren sind z.B. in Asha Mehrotra, "GSM System Engineering", Artech Haus Pub., 1996, oder in D.R. Stinson, "Cryptography Theory and Practice", CRC Press, 1995, beschrieben.

Aus WO 00/01187, Subscriber validation method in cellular communication system, ist ein Dual Mode Kommunikationssystem aus AMPS- und GSM-Netzwerken bekannt für Dual Mode Endgeräte, die mit einer entsprechenden SIM Karte ausgestattet sind. Die Endgeräte speichern eine gerätebezogene Nummer (ESN) und die SIM Karte speichert eine SIM basierte gerätebezogene Nummer sowie eine teilnehmerbezogenen Nummer (MIN). Für schlüsselbasierte Authentisierungszwecke wird allerdings nur die SIM basierte gerätebezogene Nummer im AMPS Netzwerk verwendet.

EP 0 800 293, Circuit and method for generating cryptograpfhic keys, zeigt die Generierung von kryptographischen Schlüsseln in einer Kommunikationseinheit. Dabei gibt es Mittel zum Übertragen von ersten Zeichenketten während einer ersten Kommunikationssitzung und die Übertragung von zweiten Zeichenketten während einer zweiten Kommunikationssitzung, die zeitlich separiert ist von der ersten Kommunikationssitzung. Weitere Mittel stehen zur Erzeugung eines kryptographischen Schlüssels zur Verfügung aus den ersten und den zweiten Zeichenketten der zeitlich separierten Kommunikationssitzungen, um so die Sicherheit des kryptographischen Schlüssels zu erhöhen.

Aus dem Bull CP8 Dokument mit der Nummer XP-002185511 ist die Smart Card Realisierung CP8 bekannt, die Speicher und Intelligenz umfasst. Diese beiden Eigenschaften in einer Technologie vereint machen die Smart Card unverletzbar und verhindern ihre missbräuchliche Vervielfältigung. Aus diesem Grunde ist CP8 ein sehr sicheres und komfortables Mittel, um kryptographischen Schlüssel oder Daten zu transportieren.

Die Identität eines mobilen Terminals bzw. (End)geräts wird allgemein als IMEI (International Mobile Equipment Identity) bezeichnet. Sie definiert ein einziges Gerät individuell und liefert dafür eine komplette eindeutige Spezifikation.

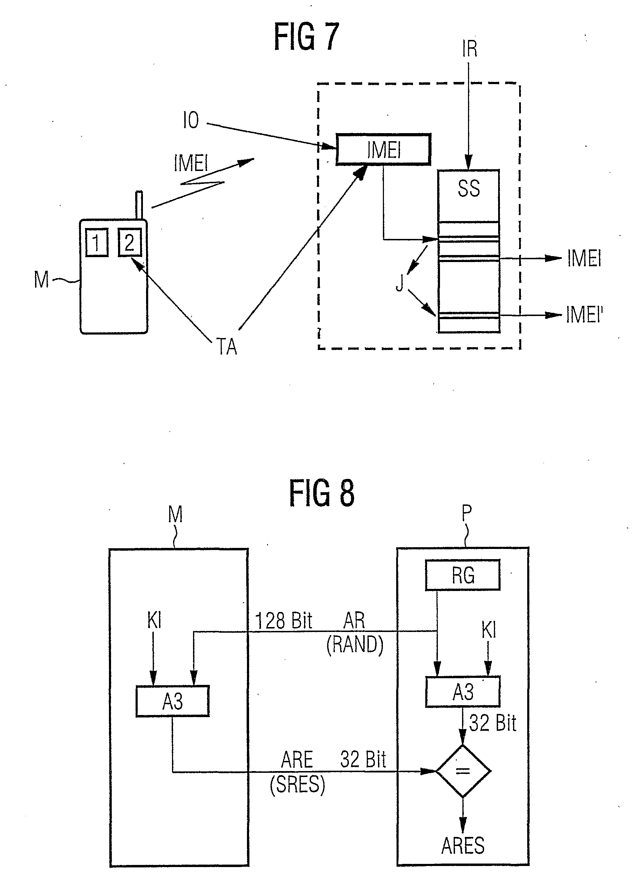

Fig. 7 ist eine schematische Darstellung eines bekannten Identifikationsmechanismus eines Mobiltelefons gegenüber einem Netzwerkbetreiber.

In Fig. 7 bezeichnet M ein Mobiltelefon mit einer zentralen Verarbeitungseinheit 1 und einem Identitätsmodul 2, welcher einen zugriffssicheren Bereich TA aufweist, in dem die Identität IMEI gespeichert ist.

Die momentane Erkennung eines solchen Gerätes M (Mobile Equipment) basiert heute im GSM-System darauf, dass das Gerät M sich durch seine IMEI offen vorstellt. Es wird gefordert, daß die Gerätehersteller dafür sorgen sollen, daß IMEI im Gerät M nicht modifizierbar ist, und daß die Software des Gerätes M immer nach Aufforderung des Netzes nur die richtige, im Gerät gespeicherte IMEI liefert.

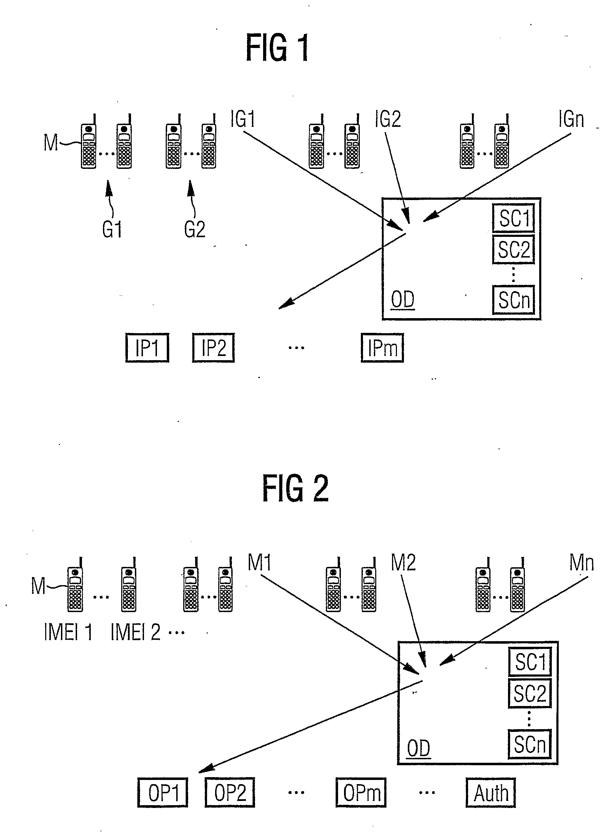

Der Einsatz im gestrichelten Rahmen von Figur 1 zeigt eine Darstellung für die allgemeine Implementierung dieses Identifikationsmechanismus. Nach einer Identitätsanfrage ("Identity request") IR liefert das Gerät M den Parameter IMEI, der vom Hersteller 10 in eine geschützte Speicherzelle eingeprägt worden ist, als Reaktion an den Netzwerkbetreiber.

Dieses Verfahren ist leicht zu fälschen. Ein Softwaresprung J im Software-Identifikationssystem SS kann (wie in Figur 1 zu sehen) jede andere Identifikation IMEI' anstelle der korrekten Identifikation IMEI liefern. Dies ist immer dann möglich, wenn man die Software des Gerätes M ändern kann, was üblicherweise leicht ist, oder wenn man die Identität IMEI ändern kann, was in der Regel etwas schwieriger ist. Das größte Problem dabei ist aber, dass geklonte Geräte nach Belieben eine Identität IMEI liefern können. Dabei braucht man nur einmal das Netz abzuhören und eine legale IMEI in Erfahrung zu bringen, da IMEI stets offen gesendet wird. Man kann aber auch legitime IMEI-Identifikationen selber generieren, da die Einstellung bekannt ist. Somit bietet diese Art der Identifikation keinen besonderen Sicherheitsstandard.

Fig. 8 ist eine schematische Darstellung eines weiteren bekannten Identifikationsmechanismus eines Mobiltelefons gegenüber einem Netzwerkbetreiber nach der Challenge&Response-Technik.

Gesicherte Identifikation durch die sogenannte Challenge&Response-Technik ist in Kryptosystemen eine bekannte Technik, um die Identität eines Geräts festzustellen.

Die Technik baut, wie in Figur 8 dargestellt, auf die Frage und Antwort auf. Die Prüfstation (z.B. eine Basisstation des Netzwerkbetreibers) P sendet an das geprüfte Gerät M eine Identifikationsanfrage AR mit einer in einem Zufallsgenerator RG erzeugten Zufalls-Symbolfolge RAND "challenge pattern" aus 128 Bits und fordert von ihm eine bestimmte Reaktion ARE "Response" mit einem Datenwort SRES aus 32 Bits, das nachweist, daß das geprüfte Gerät M einen bestimmten Geheimwert $K_i$ mit 128 ebenso wie die Prüfstation P Bits besitzt, welcher zusammen mit RAND durch eine Abbildung A3 zu einem Prüfergebnis SRES verknüpfbar ist, das vom geprüften Gerät M an die Prüfstation P retourniert wird.

Die Abbildung A3 ist eine stark nicht lineare Abbildung, die sehr schwer umkehrbar ist (oft als Einweg Funktion bezeichnet), wie in Asha Mehrotra aaO. dargestellt. Die Abbildung A3 wird in der Regel als ein Block-Chiffrierverfahren ausgewählt. Die beiden, Prüfer P und Geprüfter M, erhalten den gleichen Response SRES, falls die beiden geheimen Schlüssel $K_i$ beim Prüfer P und beim Geprüften M identisch sind. In diesem Fall ist das Identifizierungsresultat ARES positiv, ansonsten negativ.

Dieser Vorgang kann mehrmals mit unterschiedlichen Zufallswerten RAND wiederholt werden, um die Sicherheit zu erhöhen. Diese Verfahren wird schon im GSM-System eingesetzt, aber nur um einen Benutzer durch seine Benutzerkarte USIM zu identifizieren. Durch zunehmende Bedrohung durch Cloning (Nachbau) und Diebstahl von Mobilfunkgeräten ist die Notwendigkeit gestiegen, einen Mechanismus im Mobilgerät zu integrieren, der das Gerät veranlasst, sich selbst zu identifizieren, und somit gestohlene sowie geklonte oder nicht zertifizierte Geräte in einem Netz zu erkennen. Dies erfordert aber die Kenntnis des Parameters $K_i$ durch Prüfer und Geprüften. Da es aber in einem drahtlosen Netz viele Service-Anbieter und viele Hersteller gibt, sind komplexe Verwaltung und Austausch aller $K_i$'s im Netz zwischen Hersteller und Netzbetreiber notwendig.

Die Anzahl der zu identifizierenden Einheiten sowie deren Hersteller ist in heutigen Kommunikationsnetzen groß und ändert sich laufend. Dies erhöht den Verwaltungs- und Wartungsaufwand weiter.

VORTEILE DER ERFINDUNG

Das erfindungsgemäße Verfahren mit den Merkmalen des Anspruchs 1 bzw. die entsprechende Vorrichtung nach Anspruch 7 weisen gegenüber dem bekannten Lösungsansatz den Vorteil auf, dass ein auf der C&R-Technik besierender Identifikationsmechanismus geschaffen wird, der keine hohen Verwaltungs- und Wartungsaufwand erfordert. Die Erfindung ermöglicht die Identifikation einer Netzeinheit durch eine möglichst einfache im Netz vorhandene Hardwareinfrastruktur mit möglichst einfacher Verwaltung und möglichst wenig Kommunikation.

Die der vorliegenden Erfindung zugrundeliegende Idee besteht darin, daß nach einer modifizierten Challenge Response Technik überprüft wird, ob eine physikalische Einheit eine bestimmte geheime Identität enthält, ohne diese Identität zu lesen, und auch ohne diese Identität vorher zu kennen. Damit wird die Echtheit der Identität der physikaischen Einheit bzw. des Gerätes bewiesen. Das erfindungsgemäße Verfahren beruht auf einer Geheim-Kryptographie-Technik in Verbindung mit einer Anordnung von bestimmten Hardware Einheiten und mit einem Protokoll.

Das erfindungsgemäße Verfahren basiert auf der Speicherung von einer einzigartigen geheimen Identität in einem geschützten Register innerhalb des zu identifizierenden Geräts und eines geheimen Herstellerschlüssels innerhalb einer Vorrichtung, z.B. einer Smartcard, beim Prüfenden. Die geheime Identität bzw. der geheime Herstellerschlüssel wird durch eine Hardware-Einrichtung nicht lesbar gemacht, wie z.B. in Asha Mehrotra, "GSM System Engineering", Artech Haus Pub., 1996, offenbart. Das Gerät ist aber in der Lage, von sich Information zu geben, die die einzigartige Identität des Gerätes durch die Technik von Challenge & Response (C & R) nachweist.

Die Technik der Challenge & Response ist eine an sich bekannte Technik und findet verbreitete Anwendung in kryptographisch gesicherten Systemen zwecks Identifikation. Die besonderen Merkmale dieses Verfahrens sind:

- kein Register für die Identitäten der einzelnen Geräte wird benötigt;

- keine gemeinsame Kenntnis der geheimen Identität durch Prüfer und Geprüfter ist nötig;

- die Lösung ist angepasst an die Gegebenheiten und Umgebung von Mobiltelefonen mit vielen Dienstanbietern und Herstellern, die international arbeiten und schwachen Informationsaustausch und Koordinationsmöglichkeiten haben; und

- die Technik baut Einheiten auf, die schon im System vorhanden sind.

Die Erfindung ist eine Erweiterung der Challenge Response Technik, um die Identifikation weniger komplex und dadurch flexibel und kostengünstiger zu gestalten. Die neue Technik nutzt in einer bevorzugten Ausgestaltung Internet Server und moderne Smart-Card-Technik.

In den Unteransprüchen finden sich vorteilhafte Weiterbildungen und Verbesserungen des Gegenstandes der Erfindung.

Gemäß einer bevorzugten Weiterbildung wird der offene Schlüssel durch eine zweite Krypto-Funktion aus einem ersten geheimen Schlüssel und einem zweiten geheimen Schlüssel erzeugt.

Gemäß einer weiteren bevorzugten Weiterbildung wird die geheime Identität durch eine dritte Krypto-Funktion aus der offenen Identität und dem zweiten geheimen Schlüssel erzeugt.

Gemäß einer weiteren bevorzugten Weiterbildung wird in der Prüfeinrichtung der erste geheime Schlüssel gespeichert wird und die geheime Identität durch folgende Schritte in der Prüfeinrichtung erzeugt: Erzeugen des zweiten geheimen Schlüssels durch die Inverse zur zweiten Krypto-Funktion aus dem ersten geheimen Schlüssel und dem offenen Schlüssel; und Erzeugen der geheimen Identität durch die dritte Krypto-Funktion aus aus der offenen Identität und dem erzeugten zweiten geheimen Schlüssel.

Gemäß einer weiteren bevorzugten Weiterbildung wird der offene Schlüssel über das Internet an die Prüfeinrichtung gesendet.

Gemäß einer weiteren bevorzugten Weiterbildung erfolgen ein Erzeugen eines zweiten Parameters in der physikalischen Einheit; ein Senden des zweiten Parameters an die Prüfeinrichtung; und ein Erzeugen der elektronischen Unterschrift und der entsprechenden elektronischen Unterschrift aus der geheimen Identität und dem ersten und zweiten Parameter.

Gemäß einer weiteren bevorzugten Weiterbildung werden der erste und der zweite Parameter durch eine exklusive ODER-Funktion verknüpft.

Gemäß einer weiteren bevorzugten Weiterbildung werden der erste und der zweite Parameter multiplexiert und anschließend durch eine exklusive ODER-Funktion verknüpft, wobei es eine Rückkopplung vom Ausgang der ersten Krypto-Funktion zur exklusiven ODER-Funktion gibt. Eine derartige nichtlineare Funktion erhöht die Sicherheit zusätzlich.

Gemäß einer weiteren bevorzugten Weiterbildung werden der erste und/oder zweite Parameter als Zufallsgrößen vorgesehen.

Gemäß einer weiteren bevorzugten Weiterbildung ist das Telekommunikationsnetzwerk ein Mobiltelefonsystem.

Gemäß einer weiteren bevorzugten Weiterbildung sind die erste, zweite und dritte Krypto-Funktion die gleiche Funktion.

Gemäß einer weiteren bevorzugten Weiterbildung ist die gleiche Funktion eine Standardfunktion.

Gemäß einer weiteren bevorzugten Weiterbildung werden die Schritte e) und f) auf einer Smard-Card in der Prüfeinrichtung durchgeführt.

ZEICHNUNGEN

Ausführungsbeispiele der Erfindung sind in den Zeichnungen dargestellt und in der nachfolgenden Beschreibung näher erläutert.

Es zeigen:

Fig. 1    eine schematische Darstellung der Teilnehmer und des Systemaufbaus bei einer ersten Ausführungsform des erfindungsgemäßen Verfahrens;

Fig. 2    eine schematische Darstellung der Teilnehmer und eines speziellen Systemaufbaus bei der ersten Ausführungsform des erfindungsgemäßen Verfahrens;

Fig. 3    das Grundprinzip der ersten Ausführungsform des erfindungsgemäßen Verfahrens;

Fig. 4    die Initialisierungsvorprozedur INI bei der ersten Ausführungsform der vorliegenden Erfindung;

Fig. 5    das Identitätsmodul auf der Seite des Mobiltelefons und dessen Funktion bei der ersten Ausführungsform der vorliegenden Erfindung;

Fig. 6    die Smard-Card auf der Seite des Prüfers und deren Funktion bei der ersten Ausführungsform der vorliegenden Erfindung;

Fig. 7    eine schematische Darstellung eines bekannten Identifikationsmechanismus eines Mobiltelefons gegenüber einem Netzwerkbetreiber; und

Fig. 8    eine schematische Darstellung eines weiteren bekannten Identifikationsmechanismus eines Mobiltelefons gegenüber einem Netzwerkbetreiber nach der Challenge&Response-Technik.

BESCHREIBUNG DER AUSFÜHRUNGSBEISPIELE

In den Figuren bezeichnen gleiche Bezugszeichen gleiche oder funktionsgleiche Komponenten.

Fig. 1 zeigt eine schematische Darstellung der Teilnehmer und des allgemeinen Systemaufbaus bei einer ersten Ausführungsform des erfindungsgemäßen Verfahrens.

Die Identitäten für die Systemteilnehmer werden von vielen Identitätsgeneratoren (Identitätsinhaber) erzeugt. Die Anzahl der Identitätsgeneratoren nach Figur 1 ist n (natürliche Zahl), also sind die Identitätsgeneratoren $IG_1$, $IG_2$ ... $IG_n$. G1, G2 bezeichnen verschiedene Gruppen für den Identitätsgenerator $IG_1$.

Die Anzahl der Identitätsprüfer ist m (natürliche Zahl), also sind die Identitätsprüfer $IP_1$ ... $IP_m$. OD in Fig. 1 bezeichnet ein offenes Verzeichnis mit SC1, ..., SCn als n feri verfügbaren Smart-Cards.

Fig. 2 zeigt eine schematische Darstellung der Teilnehmer und eines speziellen Systemaufbaus bei der ersten Ausführungsform des erfindungsgemäßen Verfahrens.

Hierbei handelt es sich um ein Mobiltelefonsystem mit n Mobiltelefon-Herstellern als Identitätsgeneratoren $M_1$ ... $M_n$ für individuelle Identifikationen IMEI1, IMEI2, etc.. Im System sind m Identitätsprüfer als Dienstanbieter $OP_1$ ... $OP_m$. Hier wird darauf hingewiesen, dass die Identität nicht ausschließlich vom Hersteller generiert und geprüft werden kann, sondern auch von anderen Quellen Auth, wie eine Behörde oder weitere Systemadministratoren.

Jeder Dienstanbieter $OP_1$ ... $OP_m$ und/oder Systemüberwacher oder Administrator soll in der Lage sein, ohne große Datenhaltung, die Identität eines Funktelefons, genannt IMEI (International Mobile Equipment Identity), auf Echtheit zu prüfen.

Echtheit bedeutet hier, dass diese Geräte tatsächlich vom Hersteller stammen, und dass der Hersteller die IMEI vergeben hat, was hier indirekt bedeutet, dass der Hersteller für die Qualität des Geräts und seine technischen Merkmale beim Verlassen der Fabrik haftet.

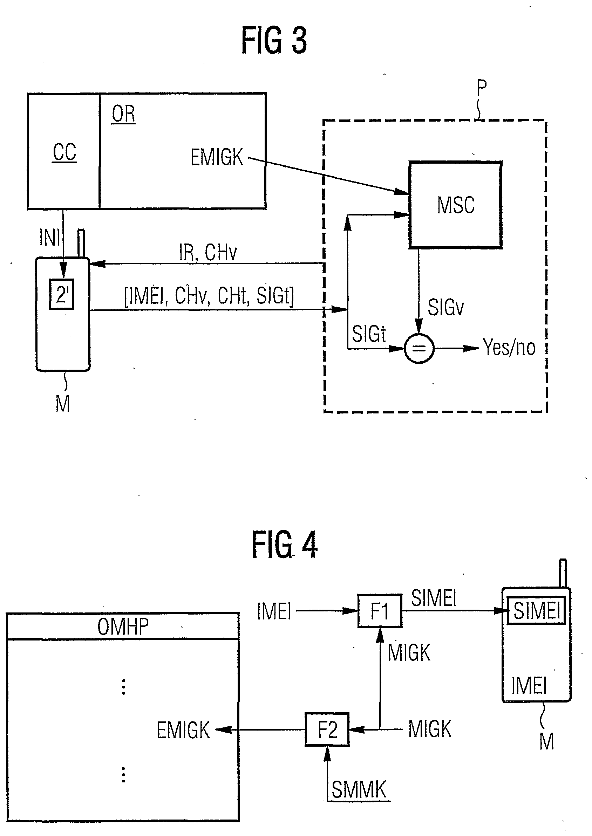

Fig. 3 zeigt das Grundprinzip der ersten Ausführungsform des erfindungsgemäßen Verfahrens.

Diese Ausführungsform erlaubt jedem Dienstanbieter $OP_1$ ... $OP_m$ oder jeder Behörde oder Dritten die Echtheit der Identität für jedes Gerät M im Netz zu überprüfen, ohne das Mobiltelefon bzw. Gerät zu sehen. Der Prüfer P braucht ferner keine Abfrage bei dem Hersteller und braucht auch keine Liste von Serien- oder IMEI-Nummern und deren einzelnen Geheimschlüsseln. Der Prüfer P braucht lediglich eine elektronische Karte oder Smard-Card MSC vom Hersteller (oder vom Identitätsgeber/ -inhaber), und braucht nur einmal ein offenes Verzeichnis OR des Herstellers (z. B. Internet) abzufragen. Jeder Hersteller bietet eine Smart-Card für jeden Prüfer P. Diese Smart-Cards MSC sind als ein Teil des offenen Verzeichnis OR zu betrachten, wie in Figur 3 dargestellt ist.

Das Identifizierungsverfahren gemäß dieser Ausführungsform läuft prinzipiell folgendermaßen ab: Der Identitätsgeber initialisiert das Mobiltelefon M in einer von einem Zertifizierungsbereich CC ausgeführten Vorprozedur INI, indem er es mit einer geheimen Identität SIMEI versieht, welche in einem beschreibbaren, aber nichtlesbaren Speicher im Identifizierungsmodul 2' des Geräts M abgelegt wird. Weiterhin erhält das Identifizierungsmodul 2' die Fähigkeit, auf eine Anfrage hin eine vorbestimmte Identifizierungsprozedur abzuarbeiten. Dabei sollte das Identifizierungsmodul 2' ein lebenswichtiger Bestandteil des Geräts M sein, was bedeutet, daß ein Entfernen bzw. Austauschen des Identifizierungsmoduls 2' zu einem Funktionsverlust führt. Weiterhin erhält das Gerät M eine offen übertragbare Identität IMEI versieht, welche in einem nicht-flüchtigen, nach Erstbeschreibung nicht modifizierbaren Speicher des Geräts M abgelegt wird.

Der Prüfer P fordert die Identität des Mobiltelefons M durch eine Identitätsanfrage (Identity Request) IR, mit der zusammen ein Parameter CHv übermittelt wird.

Das Mobiltelefon M sendet darauf seine Identität IMEI zusammen mit einer elektronischen Unterschrift SIGt des Identitätsgebers (Herstellers) und einem weiteren Parameter CHt an den Prüfer P.

Der Prüfer P fragt einen Hersteller-Prüfschlüssel EMIGK vom offenen Verzeichnis OR im Internet ab.

Der Prüfer P überzeugt sich von der Unterschrift des Herstellers durch die Smart-Card MSC vom Hersteller und entscheidet, ob die Identität echt ist oder nicht; Dazu erzeugt er mittels der Parameter IMEI, CHv, CHt und EMIGK eine entsprechende elektronische Unterschrift SIGv und vergleicht diese mit der übermittelten elektronischen Unterschrift SIGt. Stimmen beide elektronischen Unterschriften SIGt und SIGv überein, ist die Identität echt, ansonsten nicht.

Im Detail werden die Systemvorgänge und Mechanismen nachstehend anhand von Fig. 4 bis 6 erläutert.

Fig. 4 zeigt die Initialisierungsvorprozedur INI bei der ersten Ausführungsform der vorliegenden Erfindung.

Der Hersteller/Identitätsgeber vergibt die Identität IMEI für sein Gerät M als Zusatz zur Seriennummer nach dem Verfahren, die im Standard vereinbart ist.

Der Hersteller schreibt im Gerät M in ein geschütztes Register die erste geheime Identität SIMEI, die der Hersteller durch eigenen geheimen Herstellerschlüssel MIGK (Master Identity Generator Key) erzeugt. Eine Einwegabbildung F1 generiert die erste geheime Identität SIMEI aus der Identität IMEI und dem Herstellerschlüssel MIGK:

$$\text{SIMEI} = \text{F1 (IMEI, MIGK)} \qquad\qquad (1)$$

Jeder Hersteller kann für jede Gerätegruppe ein oder mehrere solcher MIGK Schlüssel vorsehen.

Der Hersteller veröffentlicht einen öffentlichen Schlüssel EMIGK in seiner offenen Internet-Homepage OMHP. EMIGK ist ein chiffriertes Abbild vom Herstellerschlüssel MIGK durch die Funktion F2 wobei:

$$EMIGK = F2 \ (MIGK, \ SMMK) \tag{2}$$

Dabei ist SMMK (Secret Manufacturer Master-Key) der Hauptgeheimschlüssel des Herstellers. Für jeden Gerättyp kann der Hersteller einen solchen Eintrag vorsehen oder einwn Einzeleintrag für alle Hersteller Typen verwenden.

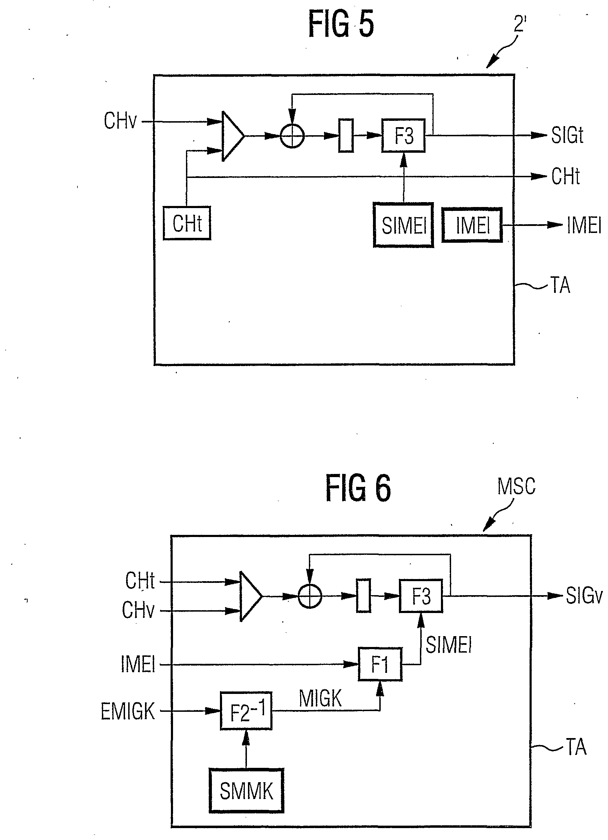

Der Hersteller hält die beiden Schlüssel SMMK und MIGK geheim. Allerdings liefert der Hersteller die Smart-Card MSC an den oder die Prüfer P, welche SMMK in einem geschützten und nicht lesbaren Register enthält (vgl. Figur 6) und die inverse Funktion zu F2, also F2$^{-1}$, enthält, die aus SMMK und EMIGK den Herstellerschlüssel MIGK erzeugen kann.

Alle Zwischenergebnisse in der Smart-Card MSC (Fig. 6) und im Identifizierungsmodul 2' (Fig. 5) sind physikalisch nicht erreichbar (d.h. weder zum Schreiben noch zum Lesen). Dies sollte bei der Herstellung gewährleistet werden.

Der Hersteller kann zur Sicherheit die Smart-Card MSC selbst herstellen, um die o.g. Bedingungen zu erfüllen, oder diese von einem vertrauenswürdigen Dritten beziehen.

Fig. 5 zeigt das Identitätsmodul auf der Seite des Mobiltelefons und dessen Funktion bei der ersten Ausführungsform der vorliegenden Erfindung.

Der Prüfer P, z.B. der Netzoperator oder die Behörde, fragt das Gerät M nach seiner Identität ind der Anfrage IR und fordert eine Signatur für den mitgelieferten Zufallswert CHv.

Das Gerät M generiert in seinem Identitätsmodul 2' die elektronische Unterschrift SIGt als Funktion der ersten geheimen Identität SIMEI und CHv und eines neuen Zufallswerts CHt, der durch das Gerät M generiert wird, mittels der Krypto-Funktion F3:

$$SIGt = F3 \ (SIMEI, \ CHv, \ CHt) \tag{3}$$

Die elektronische Unterschrift SIGt wird zusammen mit CHt und IMEI an den Prüfer P als beglaubigte Identität gesendet, wie in Figur 3 dargestellt ist. CHv liegt bereits beim Prüfer P vor, da es dort generiert wurde.

Der Prüfer P berechnet die entsprechende elektronische Unterschrift SIGv aus IMEI, CHt, CHv durch die gleiche Krypto-Funktion F3:

$$SIGv = F3 \ (IMEI, \ CHv, \ CHt) \tag{4}$$

Falls SIGt = SIGv, dann wird IMEI als authentisch betrachtet.

Im Gerät M ist ein geschützter Bereich eingerichtet, der ein nicht-lesbares Register mit SIMEI und der Krypto-Abbildung F3 sowie ein Register mit IMEI, das vorzugsweise nicht modifizierbar ist, enthält. Dazu enthält das Gerät M einen Zufallsgenerator CHt. Alle diese Einheiten werden in einer geschützten physikalischen Einheit, hier im Identitätsmodul 2', zusammen integriert, wie in Figur 5 dargestellt. Zur Erzeugung der elektonischen Unterschrift SIGt des Geräts M werden folgende Schritte getätigt:

Ein Zufallswert CHt wird neu generiert.

CHv und CHt werden zusammen mit SIMEI durch die Krypto-Einweg-Funktion F3 verknüpft. Z.B. kann CHt XOR CHv erst erzeugt und dann durch F3 mit SIMEI als Schlüssel abgebildet werden, wie in' Figur 5 gezeigt ist. Es ist ebenfalls möglich, wie in Figur 5 gezeigt, CHv und CHt zu multiplexen (Multiplexer-Steuerung nicht gezeigt) und dann dem XOR (+) zuzuführen, wobei es eine Rückkopplung vom Ausgang von F3 zum XOR (+) gibt.

Das Gerät M liefert dann als prüfbaren Identitätsvektor das folgende Prüfvektor-Tupel an den Prüfer:

$$Prüfvektor = (IMEI, \ SIGt, \ CHt, \ CHv)$$

Durch die Identität IMEI, die als offene Identität gilt, werden der Gerätetyp und -hersteller bekannt. Der Prüfer P kann dann leicht von den offenen Verzeichnis OR des Herstellers den dazugehörigen offenen Prüfschüssel EMIGK vom Internet abholen. Alternativ könnte der Prüfer eine Liste vom Hersteller verwalten und von Zeit zu Zeit aktualisieren, um im Internet Zugriffe zu sparen, und nur zum Internetverzeichnis der Hersteller gehen, falls der Hersteller neue Typen bietet.

Fig. 6 zeigt die Smard-Card auf der Seite des Prüfers und deren Funktion bei der ersten Ausführungsform der vorliegenden Erfindung.

Der Prüfer P empfängt vom Mobiltelefon M den Prüfvektor und überprüft, ob die Signatur SIGt die Identität des Geräts nachweist, also SIGv = SIGt gilt. Der Prüfer P hat danach den Beweis, daß die vom Gerät M behauptete IMEI tatsächlich vom Hersteller stammt. Für diesen Zweck ist die Smart-Card MSC vom Hersteller notwendig, die verfügbar für jeden Prüfer P sein soll. Diese Smart-Card MSC nach Figur 6 enthält alle drei Abbildungen F1, F2$^{-1}$ und F3 sowie ein geschütztes einmal beschreibbares Register mit dem geheimen Schlüssel SMMK, als Hersteller/Identitätsgeber Master Geheimschlüssel (Secret Manufacturer Master Key). SMMK wird, wie gesagt, durch Hersteller/Identitätsträger in die Smart-Card MSC eingeschrieben. SMMK ist physikalisch nicht lesbar. Die geschützten Schlüssel im übrigen folgende Regeln erfüllen:

1. Sie sind physikalisch nicht lesbar, und zwar vorzugsweise auch bei desturktivem Öffnen der Vorrichtung.

2. Sie sind nur überschreibbar, wenn der Schreiber den aktuellen Inhalt kennt.

Der Prüfer P führt den Prüfvektor der Smart-Card MSC zu und führt folgende Operationen durch:
Der Prüfer P holt vom Internet den Hersteller-Prüfschlüssel EMIGK, nachdem er IMEI bzw. Type des Geräts und Name des Herstellers vom Gerät M erhält.

Der Prüfer P gibt die empfangenen Komponenten des Prüfvektors zusammen mit EMIGK in die Smart-Card MSC ein. Die Smart-Card MSC dechiffriert erst EMIGK mit Hilfe des Schlüssels SMMK und der dechiffrierten Funktion F2$^{-1}$. Daraus ergibt sich der Hersteller/Identitätsgeber Master Geheimschlüssel MIGK. Die Hard- und Software der Smart-Card MSC dürfen dabei das Lesen von MIGK nicht ermöglichen.

Die erste geheime Identität SIMEI wird dann generiert. Dies geschieht durch Verwendung von MIGK und IMEI über die Funktion F1, wie Figur 6 zeigt. Die Hard- und Software der Smart-Card MSC dürfen wiederum das Lesen von SIMEI nicht ermöglichen.

SIMEI wird intern mit den beiden Zufallsgrößen CHt, CHv über die Funktion F3 in gleicher Art und Weise wie in der Smart-Card MSC verknüpft, um die elektronische Unterschrift SIGv zu bekommen.

Falls SIGv = SIGt, dann gilt die Identität IMEI als echt, und die Identität des Geräts ist akzeptiert, ansonsten ist die Identifizierung gescheitert.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Für die Abbildungen F1, F2 und F3 kann die standardisierte Kryptofunktion im Mobiltelefonsystem verwendet werden. In diesem Fall wird F1 = F2 = F3 = SF (Standard-Funktion) angenommen.

Das vereinfacht den Aufbau der Smart-Card MSC, da solche Smart-Cards ohnehin im System existieren, können die Hersteller solche verwenden. Da auch SF im Mobiltelefon vorhanden ist, resultiert daraus eine im Endeffekt sehr effektive Implementierung.

**Patentansprüche**

1. Verfahren zur Identifikation einer physikalischen Einheit (M) in einem offenen, drahtlosen Telekommunikationsnetzwerk durch eine Prüfeinrichtung (P) mit den Schritten:

 a) Speichern einer geheimen Identität (SIMEI) und einer offenen Identität (IMEI) in der physikalischen Einheit (M), wobei eine Einwegabbildung F1 die geheime Identität (SIMEI) aus der offenen Identität (IMEI) und einem Herstellerschlüssel (MIGK) generiert, und Ablegen eines offenen Schlüssels (EMIGK) in einer offenen Internet-Homepage OMHP des Herstellers des zu identifizierenden Gerätes M -, welcher durch eine Krypto-Funktion F2 aus einem ersten geheimen Schlüssel (SMMK) des Herstellers und dem zweiten geheimen Schlüssel (MIGK, Master Identity Generator Key) erzeugt wird;
 b) Erzeugen eines ersten Parameters (CHv) in der Prüfeinrichtung (P);
 c) Senden einer Identifikationsaufforderung (IR) mit dem ersten Parameter (CHv) von der Prüfeinrichtung (P) an die physikalische Einheit (M);
 d) Erzeugen einer elektronischen Unterschrift (SIGt) in der physikalischen Einheit (M) durch eine erste Krypto-Funktion (F3) aus der geheimen Identität (SIMEI), dem ersten Parameter (CHv) und einem zweiten Parameter (CHt), welcher durch die physikalische Einheit (M) generiert wird, wobei der erste und der zweite Parameter (CHv; CHt) multiplexiert und anschließend durch eine exklusive ODER-Funktion (+) mit dem Ausgang (SIGt) der ersten Krypto-Funktion (F3) verknüpft werden, und Senden der erzeugten elektronischen Unterschrift (SIGt), der offenen Identität (IMEI) und des zweiten Parameters (CHt) an die Prüfeinrichtung (P);
 e) Erzeugen der geheimen Identität (SIMEI) aus einem vom offenen Verzeichnis (OR) des Herstellers heruntergeladenen offenen Schlüssel (EMIGK) und der empfangenen offenen Identität (IMEI) in der Prüfeinrichtung (P), wobei die geheime Identität (SIMEI) durch die Verwendung von dem Herstellerschlüssel (MIGK) und der offenen Identität (IMEI) über die dritte Funktion F1 erzeugt wird, wobei der zweite geheime Herstellerschlüssel (MIGK) durch die Inverse der 2. Krypto-Funktion $F2^{-1}$ aus dem offenen Schlüssel (EMIGK) und dem ersten geheimen Herstellerschlüssel (SMMK) generiert wird.

f) Erzeugen einer entsprechenden elektronischen Unterschrift (SIGv) durch die erste Krypto-Funktion (F3) aus der erzeugten ersten geheimen Identität (SIMEI), dem ersten Parameter (CHv) und dem zweiten Parameter (CHt), welcher von der physikalischen Einheit (M) empfangen wird, in der Prüfeinrichtung (P), wobei der erste und der zweite Parameter (CHv; CHt) multiplexiert und anschließend durch eine exklusive ODER-Funktion (+) mit dem Ausgang (SIGv) der ersten Krypto-Funktion (F3) verknüpft werden; und

g) Identifizieren der physikalischen Einheit (M) durch einen Vergleich der gesendeten elektronischen Unterschrift (SIGt) und der erzeugten entsprechenden elektronischen Unterschrift (SIGv) in der Prüfeinrichtung (P).

2. Verfahren nach Anspruch 1, **dadurch gekennzeichnet, dass** der offene Schlüssel (EMIGK) über das Internet an die Prüfeinrichtung (P) gesendet wird.

3. Verfahren nach einem der vorhergehenden Ansprüche, **dadurch gekennzeichnet, dass** der erste und/oder zweite Parameter (CHv; CHt) als Zufallsgrößen vorgesehen werden.

4. Verfahren nach einem der vorhergehenden Ansprüche, **dadurch gekennzeichnet, dass** das Telekommunikationsnetzwerk ein Mobiltelefonsystem ist.

5. Verfahren nach einem der vorhergehenden Ansprüche, **dadurch gekennzeichnet, dass** die erste, zweite und dritte Krypto-Funktion (F1; F2; F3) die gleiche Funktion sind.

6. Verfahren nach Anspruch 5 in Verbindung mit Anspruch 3, **dadurch gekennzeichnet, dass** die gleiche Funktion eine Standardfunktion ist.

7. Verfahren nach einem der vorhergehenden Ansprüche, **dadurch gekennzeichnet, dass** die Schritte e) und f) auf einer Smart-Card (MSC) in der Prüfeinrichtung (P) durchgeführt werden.

**Claims**

1. Method for identifying a physical unit (M) in an open wireless telecommunications network by means of a testing device (P), having the steps of:

a) storing a secret identity (SIMEI) and an open identity (IMEI) in the physical unit (M), wherein a one-way representation F1 generates the secret identity (SIMEI) from the open identity (IMEI) and a manufacturer key (MIGK), and storing an open key (EMIGK) on an open Internet homepage OMHP belonging to the manufacturer of the device M to be identified, which key is generated from a first secret key (SMMK) of the manufacturer and the second secret key (MIGK, Master Identity Generator Key) by means of a cryptographic function F2;

b) generating a first parameter (CHv) in the testing device (P);

c) transmitting an identification request (IR) containing the first parameter (CHv) from the testing device (P) to the physical unit (M);

d) generating an electronic signature (SIGt) in the physical unit (M), by means of a first cryptographic function (F3), from the secret identity (SIMEI), the first parameter (CHv) and a second parameter (CHt) which is generated by the physical unit (M), wherein the first and second parameters (CHv; CHt) are multiplexed and are then linked to the output (SIGt) of the first cryptographic function (F3) by means of an exclusive OR function (+), and transmitting the generated electronic signature (SIGt), the open identity (IMEI) and the second parameter (CHt) to the testing device (P);

e) generating the secret identity (SIMEI) from an open key (EMIGK) downloaded from the open directory (OR) of the manufacturer and the received open identity (IMEI) in the testing device (P), wherein the secret identity (SIMEI) is generated by using the manufacturer key (MIGK) and the open identity (IMEI) via the third function F1, wherein the second secret manufacturer key (MIGK) is generated from the open key (EMIGK) and the first secret manufacturer key (SMMK) by means of the inverse of the second cryptographic function $F2^{-1}$;

f) generating a corresponding electronic signature (SIGv), by means of the first cryptographic function (F3), from the generated first secret identity (SIMEI), the first parameter (CHv) and the second parameter (CHt) which is received from the physical unit (M) in the testing device (P), wherein the first and second parameters (CHv; CHt) are multiplexed and are then linked to the output (SIGv) of the first cryptographic function (F3) by means of an exclusive OR function (+); and

g) identifying the physical unit (M) by comparing the transmitted electronic signature (SIGt) and the generated corresponding electronic signature (SIGv) in the testing device (P).

2. Method according to Claim 1, **characterized in that** the open key (EMIGK) is transmitted to the testing device (P) via the Internet.

3. Method according to one of the preceding claims, **characterized in that** the first and/or second parameter (CHv; CHt) is/are provided as random variables.

4. Method according to one of the preceding claims, **characterized in that** the telecommunications network is a mobile telephone system.

5. Method according to one of the preceding claims, **characterized in that** the first, second and third cryptographic functions (F1; F2; F3) are the same function.

6. Method according to Claim 5 in conjunction with Claim 3, **characterized in that** the same function is a standard function.

7. Method according to one of the preceding claims, **characterized in that** steps e) and f) are carried out on a smart card (MSC) in the testing device (P).

**Revendications**

1. Procédé d'identification d'une unité physique (M) dans un réseau de télécommunication sans fil ouvert, par un dispositif de contrôle (P), comprenant les étapes suivantes :

   a) mémorisation d'une identité secrète (SIMEI) et d'une identité ouverte (IMEI) dans l'unité physique (M), une image unidirectionnelle F1 générant l'identité secrète (SIMEI) à partir de l'identité ouverte (IMEI) et d'une clé de fabricant (MIGK), et mémorisation d'une clé ouverte (EMIGK) sur une page d'accueil internet ouverte OMHP du fabricant de l'appareil à identifier M-, laquelle clé ouverte est générée par une fonction de cryptage F2 à partir d'une première clé secrète (SMMK) du fabricant et de la deuxième clé secrète (MIGK, Master Identity Generator Key) ;
   b) génération d'un premier paramètre (CHv) dans le dispositif de contrôle (P) ;
   c) envoi d'une demande d'identification (IR) avec le premier paramètre (CHv) par le dispositif de contrôle (P) à l'unité physique (M) ;
   d) génération d'une signature électronique (SIGt) par une première fonction cryptographique (F3) dans l'unité physique (M), à partir de l'identité secrète (SIMEI), du premier paramètre (CHv) et d'un deuxième paramètre (CHt) qui est généré par l'unité physique (M), les premier et deuxième paramètres (CHv ; CHt) étant multiplexés puis combinés par une fonction OU exclusif (+) avec la sortie (SIGt) de la première fonction cryptographique (F3), et envoi de la signature électronique (SIGt) générée, de l'identité ouverte (IMEI) et du second paramètre (CHt) au dispositif de contrôle (P) ;
   e) génération de l'identité secrète (SIMEI) à partir d'une clé ouverte (EMIGK) téléchargée depuis le répertoire ouvert (OR) du fabricant et de l'identité ouverte (IMEI) reçue dans le dispositif de contrôle (P), l'identité secrète (SIMEI) étant générée par utilisation de la clé de fabricant (MIGK) et de l'identité ouverte (IMEI) par l'intermédiaire de la troisième fonction F1, la deuxième clé de fabricant secrète (MIGK) étant générée par l'inverse de la deuxième fonction cryptographique F2$^{-1}$ à partir de la clé ouverte (EMIGK) et de la première clé de fabricant secrète (SMMK),
   f) génération d'une signature électronique correspondante (SIGv) par la première fonction cryptographique (F3), à partir de la première identité secrète (SIMEI) générée, du premier paramètre (CHv) et du deuxième paramètre (CHt), qui est reçu de l'unité physique (M), dans le dispositif de contrôle (P), les premier et deuxième paramètres (CHv ; CHt) étant multiplexés puis combinés par une fonction OU exclusif (+) avec la sortie (SIGv) de la première fonction cryptographique (F3) ; et
   g) identification de l'unité physique (M) par comparaison de la signature électronique (SIGt) envoyée et de la signature électronique (SIGv) correspondante générée, dans le dispositif de contrôle (P).

2. Procédé selon la revendication 1, **caractérisé en ce que** la clé ouverte (EMIGK) est envoyée au dispositif de contrôle (P) par l'intermédiaire de l'Internet.

3. Procédé selon l'une des revendications précédentes, **caractérisé en ce que** les premier et/ou deuxième paramètres (CHv ; CHt) sont prévus en tant que variables aléatoires.

4. Procédé selon l'une des revendications précédentes, **caractérisé en ce que** le réseau de télécommunication est un système de téléphonie mobile.

5. Procédé selon l'une des revendications précédentes, **caractérisé en ce que** les première, deuxième et troisième fonctions cryptographiques (F1 ; F2 ; F3) sont une même fonction.

6. Procédé selon la revendication 5 en relation avec la revendication 3, **caractérisé en ce que** ladite même fonction est une fonction standard.

7. Procédé selon l'une des revendications précédentes, **caractérisé en ce que** les étapes e) et f) sont effectuées sur une carte à puce (MSC) dans le dispositif de contrôle (P).

# FIG 1

# FIG 2

# FIG 3

# FIG 4

# FIG 5

# FIG 6

## FIG 7

## FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0001187 A

- EP 0800293 A

**In der Beschreibung aufgeführte Nicht-Patentliteratur**

- **ASHA MEHROTRA.** GSM System Engineering. Artech Haus Pub, 1996

- **D.R. STINSON.** Cryptography Theory and Practice. CRC Press, 1995